# EUROPÄISCHE PATENTANMELDUNG

(11) **EP 1 060 697 A1**
(43) Veröffentlichungstag der Anmeldung: **20.12.2000**
(21) Anmeldenummer: 00103676.3
(22) Anmeldetag: 22.02.2000
(51) Int. Cl.: A47G 7/04, A01G 9/02

(54) **Aufhängbares Pflanzgefäss**

(30) Priorität: 10.06.1999 EP 99111001
(71) Anmelder: Besecke, Edmund E., 31785 Hameln (DE)
(72) Erfinder: Besecke, Edmund E., 31785 Hameln (DE)
(74) Vertreter: Dantz, Jan Henning

(57) **Zusammenfassung**

Ein aufhängbares Pflanzgefäß soll so gestaltet werden, dass seine Lebensdauer wesentlich erhöht wird und dass zum Verbinden der einzelnen Bauteile keine mechanischen Verbindungselemente und Werkzeuge notwendig sind.

Erfindungsgemäß besteht das Pflanzgefäß in einer ersten Ausführungsform aus einem Blumenkasten (28) und mindestens zwei Blumenkastenhaltern (10), die aus einem beständigen Material, vorzugsweise aus Kunststoff hergestellt sind. Die Einhängebügel (12) sind mit dem Tragbügel (11) rastend verbunden. Außerdem ist in den horizontalen Schenkeln (11b) des Tragbügels (11) ein Schiebewinkel (22) eingesetzt der ebenfalls durch eine Verrastung gesichert ist. Gemäß einer zweiten Ausführungsform sind an einer Seitenwand des Blumenkastens (28) im oberen Bereich mindestens zwei Taschen (15) angeformt, in die jeweils ein Schenkel des Einhängewinkels (12) eingesteckt ist. Die Verbindung erfolgt ebenfalls durch entsprechende Verzahnungen. Der Boden des Blumenkastens (28) ist mit mehreren Aussparungen versehen, in die ein Schiebewinkel (14) eingerastet ist. Dieser Schiebewinkel (14) wird bei dem Blumenkastenhalter (10) in den horizontalen Schenkel (11b) des Tragbügels (11) eingeschoben.

Das erfindungsgemäße Pflanzgefäß ist besonders zur Aufhängung an einem Balkongeländer geeignet.

## Beschreibung

Die Erfindung betrifft ein aufhängbares Pflanzgefäß, das aus einem Blumenkasten und Blumenkastenhaltern besteht, und der Blumenkastenhalter mit einem Einhängewinkel, einem Tragbügel und vorzugsweise mit einem Sicherungshaken ausgestattet ist, und bei dem zumindest der Blumenkasten aus einem beständigen Material gefertigt ist.

Der Blumenkasten des in Frage kommenden Pflanzgefäß wird vorzugsweise aus einem geeigneten Kunststoff hergestellt, da es sich um einen beständigen Werkstoff handelt, und wodurch es außerdem möglich ist, dass der Blumenkasten mittels eines Werkzeuges im Spritzgießverfahren hergestellt werden kann. Üblicherweise sind die Blumenkästen derart konisch gestaltet, dass die offene Seite größer ist als der Boden, da dadurch gewährleistet ist, dass die Blumenkästen stapelbar sind. Üblicherweise sind die beiden Seitenwände und die beiden Stirnwände höhengleich. Die oberen freien Randkanten der Seiten- und Stirnwände sind bei den üblichen Ausführungen abgewinkelt oder in ähnlicher Weise verstärkt.

Zum Aufhängen eines Pflanzgefäßes werden bislang wenigstens zwei Blumenkastenhalter benötigt, in die der Blumenkasten eingesetzt wird, wobei sich die Anzahl der Blumenkastenhalter nach der Länge des Blumenkastens richtet. Die bislang verwendeten Blumenkastenhalter bestehen aus Stahl und sind durch eine Farb- oder Lackbeschichtung gegen Korrosion geschützt. Der Einhängebügel wird bei diesem Blumenkastenhalter über den oberen Rand eines Balkongeländers oder einer Brüstung gestülpt. Außerdem ist der Einhängebügel mit einem Tragbügel verschraubt, der den eingestellten Blumenkasten umgreift. Außerdem kann der Blumenkastenhalter noch mit einem Sicherungshaken ausgestattet sein, der den oberen Rand derjenigen Seitenwand des Blumenkastens hintergreift, der dem Balkongeländer bzw. der Brüstung zugewandt liegt. Die Handhabung dieses Blumenkastenhalters ist sehr umständlich, außerdem ist die Lebensdauer begrenzt, da die Farb- oder Lackbeschichtung beschädigt wird, wodurch sich dann Rost ansetzt.

Der Erfindung liegt die Aufgabe zugrunde, ein aufhängbares Pflanzgefäß der eingangs näher beschriebenen Art so zu gestalten, dass die Lebensdauer insbesondere der Blumenkastenhalter wesentlich erhöht wird, und dass zum Verbinden der einzelnen Bauteile des Blumenkastenhalters keine mechanischen Verbindungselemente notwendig sind. Außerdem soll die Anzahl der Bauteile und die Handhabung beim Aufhängen eines Pflanzkastens vereinfacht werden.

Die gestellte Aufgabe wird gelöst, indem auch die Blumenkastenhalter aus einem beständigen Material mit form- und materialfedernden Eigenschaften gefertigt sind, und dass zumindest der Einhängewinkel in eine Tasche oder in eine Aussparung des Tragbügels oder des Blumenkastens einsetzbar und mittels eines Feststellers form- und/oder kraftschlüssig sowie gegebenenfalls einstellbar mit dem Tragbügel oder dem Blumenkasten verbunden ist.

Da nunmehr die Blumenkastenhalter aus einem gegen Korrosion beständigen Material gefertigt sind, beispielsweise aus einem geeigneten Kunststoff oder aus Aluminium, entfällt der bislang notwendige Oberflächenschutz. Da durch die Art des Materials die Korrosion wirksam verhindert wird, wird zumindest die Lebensdauer des Blumenkastenhalters wesentlich erhöht. Als Material wird jedoch bevorzugt ein recyclefähiger Werkstoff verwendet. Sofern ein geeigneter Kunststoff zur Anwendung kommt, kann dieser noch durch Glasfasern verstärkt werden. Das Material muß solche Eigenschaften haben, dass die form- und/oder kraftschlüssige Verbindung den Belastungen des bepflanzten Pflanzgefäßes standhält. Außerdem muß durch eine entsprechende Gestaltung der Verbindungsbereiche gewährleistet sein, dass zur Verstellung des Einhängewinkels gegenüber dem Tragbügel oder dem oberen Rand des Blumenkastens die Verbindung in einfachster Weise durch die Feststeller gelöst werden kann. Durch die form- und/oder kraftschlüssige Verbindung zwischen den Tragbügeln oder dem Rand des Blumenkastens und dem Einhängewinkel ist eine einfache und exakte Einstellung auf die Breite des oberen Randes einer Balkonbrüstung oder eines Balkongeländers möglich.

Eine konstruktiv einfache Lösung wird erreicht, wenn wenigstens ein Schenkel jedes Einhängewinkels eine Verzahnung oder Profilierung aufweist, die mit dem der Tasche oder der Aussparung zugeordnetem Feststeller in und außer Eingriff bringbar ist. Jede Verzahnung bzw. jede Profilierung ist so gestaltet, dass die Möglichkeit besteht, den Abstand des abgewinkelten freien Schenkels des Einhängewinkels zum parallel dazu stehenden Schenkel des Tragbügels oder der zugeordneten Wand des Blumenkastens zu verändern. Dadurch kann eine optimale Anpassung an eine Brüstung oder an ein Balkongeländer erfolgen, so dass der Einhängewinkel schließend darauf aufgestülpt werden kann. In einfachster Weise ist der Feststeller eine in einer die Tasche oder die Aussparung begrenzenden Wandung vorgesehene Federlasche oder eine Klinke, die innenseitig mit einer Gegenverzahnung bzw. gegen Profilierung versehen ist, wobei die Profilierungen bzw. Verzahnungen so ausgelegt sind, dass der Einhängewinkel zur Verkleinerung des Abstandes zwischen dem freien Schenkel des Einhängewinkels und dem parallel dazu stehenden Schenkel des Tragbügels bzw. der zugewandten Wand des Blumenkastens in die Tasche oder in die Aussparung einschiebbar und in der entgegengesetzten oder in beiden Schieberichtungen blockiert ist. Die Federlasche läßt sich einfach herstellen, beispielsweise durch einen U-förmigen Querschnitt. Sie ist dann so ausgelegt, dass deren Verzahnung ständig in Eingriff mit der Verzahnung bzw. Profilierung des Einhängewinkels steht. Dadurch ist der Einhängewinkel gegen eine Verschiebung gesichert. Da die Verzahnung bzw. die Profilierungen so gewählt sind, dass der Abstand zwischen den parallelen Schenkeln des Einhängewinkels, des Tragbügels oder der zugehörigen Wandung des Blumenkastens bei in Eingriff stehenden Verzahnungen oder Profilierungen verkleinert werden kann, kann der Einhängewinkel in die Tasche hinein geschoben werden. Der Verstellbereich des Einhängewinkels läßt sich noch vergrößern, wenn dieser ungleichschenkelig gestaltet ist und beide Schenkel eine Verzahnung oder Profilierung aufweisen. Es kann dann wahlweise der kürzere oder der längere Schenkel des Einhängwinkels in die Tasche des Tragbügels bzw. der Wandung des Blumenkastens eingeschoben werden. Die Federlasche ist in einfachster Ausführung durch eine U-förmige Durchbrechung gebildet und die Verzahnungen oder Profilierungen sind zweckmäßiger Weise sägezahnförmig ausgebildet. Die Zähne stehen dann so, dass bei der Verringerung des Abstandes zwischen den beiden besagten parallelen Schenkeln bzw. der Wandung die steile Flanke in Verschieberichtung hinten liegt, wodurch die Federlasche ständig nach oben geschwenkt wird, während in der anderen Richtung eine Blockierung erfolgt. Zweckmäßiger Weise ist die Tasche im Querschnitt als rechteckförmiger Ring ausgebildet, so dass die Schenkel des Einhängewinkels querschnittsmäßig als Flachstab ausgebildet sind.

Sofern das Pflanzgefäß mit einem Sicherungshaken ausgerüstet ist, erfolgt seine Festlegung ebenfalls durch eine Rastverbindung. Dazu ist dieser mit einem Schenkel rastend in eine Führung der Tasche bzw. der Aussparung eingesetzt. Zweckmäßiger Weise wird diese Rastverbindung so ausgebildet, dass der Sicherungshaken mit einem Federsteg ausgerüstet ist, der eine Verzahnung oder wenigstens einen Zahn aufweist , der mit einem eine Gegenverzahnung aufweisenden Steg des Einhängewinkels in Eingriff steht. Diese Verzahnungen sind zweckmäßigerweise ebenfalls sägezahnmäßig gestaltet, so dass der Sicherungshaken in einer Richtung ohne Betätigung des Federsteges bewegbar ist. Dies erfolgt, wenn der freie Schenkel des Sicherungshakens in Richtung zum zugehörigen Schenkel des Tragbügels oder der zugehörigen Wand des Blumenkastens verfahren wird.

Sofern das Pflanzgefäß mittels Blumenkastenhalter aufgehängt wird und die Blumenkastenhalter für alle Breiten von Blumenkästen einsetzbar sind, ist vorgesehen, dass der Tragbügel winkelförmig ausgebildet ist, und dass der waagerechte, der Tasehe für den Einhängewinkel abgewandt liegende Schenkel zur Veränderung der Breite des Tragbügels einen Schiebewinkel trägt, der rastend mit dem waagerechten Schenkel verbunden ist. Der freie Schenkel des Schiebewinkels ist in Richtung auf den Sicherungshaken gerichtet, so dass der untere Bereich eines eingesetzten Blumenkastens umgriffen ist, so dass er nicht aus den beiden Blumenkastenhaltern herausrutschen kann. Der verstellbare Schiebewinkel bietet darüber hinaus noch den Vorteil, dass der Tragbügel genau auf die Breite des Blumenkastens eingestellt werden kann, so dass er sich in den beiden Blumenkastenhaltern nicht verschieben kann. Eine konstruktiv einfache Lösung wird erreicht, indem der waagerechte Schenkel des Tragbügels ein Hohlprofil ist, und dass der eingreifende Schenkel des Schiebewinkels eine Verzahnung oder eine Profilierung aufweist und der waagerechte Schenkel zur Entriegelung mit der Verzahnung bzw. der Profilierung mit einer Lösetaste ausgerüstet ist. Diese Lösetaste hat ebenfalls einen Zahn oder eine Verzahnung, die im Normalfall ständig mit der Verzahnung bzw. mit der Profilierung des Schenkels des Schiebewinkels in Eingriff steht, so dass der Schiebewinkel gesichert ist. Zum Verfahren wird dann die Lösetaste betätigt. Zweckmäßiger Weise ist jedoch die Verzahnung oder die Profilierung derart gestaltet, dass der Schiebewinkel gegen Herausziehen oder Herausdrücken aus dem waagerechten Schenkel durch die Lösetaste gesichert ist. Das Einfahren kann dann ohne eine Betätigung der Lösetaste erfolgen, da beim Einfahren des Schiebewinkels in den horizontalen Schenkel die steuere Flanke in Schieberichtung hinten liegt.

In weiterer Ausgestaltung ist noch vorgesehen, dass dem waagerechten Schenkel des Tragbügels des Blumenkastenhalters oder dem Boden des Blumenkastens ein Ausrichtelement zugeordnet ist, welches mit dem waagerechten Schenkel bzw. dem Boden in verschiedenen Stellungen verrastbar ist und welches unterhalb des Einhängebügels liegt.

Wenn beispielsweise die zur Aufnahme eines Pflanzgefäßes notwendigen Einhängewinkel über den Obergurt eines Balkongeländers gestülpt werden, wird durch das Gewicht des Pflanzgefäßes bewirkt, dass sich dieses an dem Balkongeländer abstützt, d.h. der die Tasche tragende vertikale Schenkel des Blumenkastenhalters oder die Wand des Blumenkastens und der dazu rechtwinklig stehende Schenkel des Tragbügels oder der Boden sind gegen die Vertikale bzw. gegen die Horizontale geneigt. Dadurch wird das Aussehen beeinträchtigt. Außerdem werden durch die Schieflagen die Schiebewinkel ständig belastet.

Durch das Ausrichtelement ist nunmehr sichergestellt, dass das Pflanzgefäß in eine solche Lage gebracht wird, dass der Boden des Pflanzgefäßes horizontal steht. Das Ausrichtelement stützt sich dann gegen das Balkongeländer ab.

In einfachster Weise ist das Ausrichtelement eine Ausrichtwinkel, wobei ein Schenkel des Ausrichtwinkels in den waagerechten Schenkel des Tragbügels oder in den Boden des Blumenkastens eingreift, und dass der äußere freie Schenkel gegenüber dem eingreifenden Schenkel in wenigstens zwei verschiedene Stellungen bringbar ist. Je nach Ausführung des Balkongeländers kann dann der äußere freie Schenkel so gedreht werden, dass eine einwandfreie Abstützung am Balkongeländer mit beispielsweise Gitterstäben gegeben ist.

Zur Einstellung des Abstandes des freien Schenkels zum vertikalen Schenkel des Tragbügels des Blumenkastenhalters oder zu der zugehörigen Wand des Blumenkastens ist vorgesehen, dass der eingreifende Stab des Ausrichtwinkels eine beispielsweise sägezahnförmige Verzahnung aufweist, wobei wiederum der horizontale Schenkel einen Lösemechanismus aufweist in der Form, dass der Ausrichtwinkel nur bei betätigtem Lösemechanismus in den horizontalen Schenkel eingeschoben werden kann.

Die Profilierungen können auch ausschließlich formschlüssig ineinandergreifen. In bevorzugter Ausführung ist dann vorgesehen, daß die Profilierung jedes Einhängewinkels als Außengewinde gestaltet ist, und daß der Feststeller ein entsprechendes Innengewinde der Tasche des Tragbügels oder der Seitenwand des Blumenkastens ist. Diese Form läßt sich in einfachster Weise konstruktiv umsetzen. Es ist jedoch auch möglich, daß die Profilierung jedes Einhängewinkels ein Innengewinde ist, so daß dieser mit einer Bohrung versehen wird, und daß der Feststeller mit einem entsprechenden Außengewinde bestückt ist, welches in der Tasche des Tragbügels oder der Seitenwand des Blumenkastens angeordnet ist. Bei dieser Ausführung kann der Einhängewinkel als Massiv- oder auch als Hohlkörper ausgebildet sein. Da im Normalfall das Pflanzgefäß aus Kunststoff mit entsprechenden Werkzeugen im Spritzgußverfahren hergestellt wird, läßt sich der Einhängewinkel mit einem oder mit zwei Außengewindeschenkeln ohne weitere Arbeitsgänge herstellen. Durch die Gewinde wird eine äußerst sichere und feste Verbindung der entsprechenden Bauteile hergestellt. Außerdem läßt sich der Abstand des Vertikalen Schenkels zum Blumenkastenhalter bzw. zum Blumenkasten äußerst genau einstellen. Eine Verbindung aus Gewinden ist normalerweise jedem bekannt, so daß das Zusammenfügen der Bauteile nicht nur besonders einfach ist, sondern daß auch evtl. vorhandene Bedenken hinsichtlich der Belastbarkeit entfallen können.

In weiterer Ausgestaltung ist auch vorgesehen, daß zumindest ein Schenkel des Ausrichtwinkels ein Außengewinde als Profilierung aufweist, und daß im horizontalen Schenkel des Tragbügels oder im Boden des Blumenkastens ein entsprechendes Innengewinde vorgesehen ist. Der Ausrichtwinkel läßt sich dann auch in einfachster Weise in den horizontalen Schenkel bzw. in den Boden eindrehen. Auch hier wäre die konstruktiv nicht so günstige Lösung möglich, nämlich daß der Schenkel bzw. die Schenkel des Ausrichtwinkels mit einem Innengewinde ausgestattet sind, so daß dann in den horizontalen Schenkel des Tragbügels eine Außengewindestange eingesetzt sein müßte. Auch der mit Gewinde ausgestattete Ausrichtwinkel könnte aus Kunststoff im Spritzgußverfahren hergestellt sein, so daß nach dem Spritzvorgang keine weiteren Arbeitsgänge erforderlich werden.

Gemäß einer weiteren Ausführung ist vorgesehen, daß jede formschlüssige Verbindung zwischen jeder Tasche des Tragbügels oder der Seitenwand des Blumenkastens und ggf. die formschlüssige Verbindung zwischen dem horizontalen Schenkel des Tragbügels oder dem Boden des Blumenkastens und dem Ausrichtwinkel nach Art eines Steckverbinders gestaltet ist. Dadurch brauchen die zu verbindenden Bauteile nur ineinandergesteckt werden, wobei sie dann so gestaltet sind, daß sie verriegelt oder verrastet werden. Die Einhängewinkel, die Ausrichtwinkel und die entsprechenden Taschen werden in der notwendigen Gestaltung im Spritzgießverfahren hergestellt, so daß auch keine weiteren Bearbeitungen notwendig sind. In einfachster Ausführung ist vorgesehen, daß jeder Steckverbinder nach Art eines Bajonettverschlusses gestaltet ist, wobei ein fester Zapfen in die jeweilige Tasche bzw. in den Freiraum des horizontalen Schenkels des Tragbügels oder des Bodens des Blumenkastens hineinragt, und daß die U-förmige Ausnehmung in dem Einhängewinkel oder dem Ausrichtwinkel vorgesehen ist. Sofern der Einhängewinkel und der Ausrichtwinkel aus Rohr oder einem Hohlprofil bestehen, könnte die U-förmige Ausnehmung sich durch die ganze Wandung hindurch erstrecken, während bei einem Massivkörper die U-förmige Ausnehmung eine Nut ist. Die Arretierung des Einhängewinkels oder des Ausrichtwinkels erfolgt, indem zunächst der jeweilige Winkel in die Tasche bzw. in den Freiraum hineingeschoben wird, anschließende um einen vorgegebenen Winkel gedreht und dann wieder in der entgegengesetzten Richtung zurückgezogen wird.

Das erfindungsgemäße Pflanzgefäß läßt sich in äußerst einfacher Weise handhaben, da bei einer Gestaltung des Blumenkastens wo ein Blumenkastenhalter erforderlich ist der Einhängebügel, der Sicherungshaken, der Schiebewinkel und der Ausrichtwinkel in äußerst einfacher Weise mit dem Tragbügel verbunden werden können. Dazu sind keine Schraubverbindungen notwendig. Sofern die Taschen für den Einhängewinkel, und für den Ausrichtwinkel am Blumenkasten vorgesehen sind, wird die Anzahl der Teile noch zusätzlich reduziert.

Da das Pflanzgefäß bevorzugt aus einem geeigneten Kunststoff gefertigt wird, ist nicht nur eine äußerst einfache Herstellung mittels geeigneter Spritzwerkzeuge möglich, sondern die Lebensdauer wird gegenüber den bekannten Ausführungen wesentlich erhöht, da Rostansätze vermieden werden.

Anhand der beiliegenden Zeichnungen wird die Erfindung noch näher erläutert. Es zeigen:
- Figur 1: einen Blumenkastenhalter für den Blumenkasten eines erfindungsgemäßen Pflanzgefäßes,
- Figur 2: eine der Figur 1 entsprechende Darstellung, jedoch die einzelnen Bauteile in einer ausgefahrenen Stellung zeigen,
- Figur 3: den Blumenkastenhalter entsprechend den Figuren 1 und 2 in einer perspektivischen Darstellung mit Blick auf die unteren Flächen der Bauteile,
- Figur 4: eine den Figuren 1 und 2 entsprechende perspektivische Darstellung, und
- Figur 5: das erfindungsgemäße Pflanzgefäß im Querschnitt zur Aufhängung ohne den Blumenkastenhalter gemäß den Figuren 1 bis 4
- Figur 6: die Verbindung des Einhängewinkels und des Ausrichtwinkels mit dem Blumenkasten durch Gewinde,
- Figur 7: die Verbindung des Einhängewinkels und des Ausrichtwinkels mit dem Blumenkasten in Form eines Steckverbinders und
- Figur 8: die Steckverbindung als Einzelheit in Form eines Bajonettverschlusses.

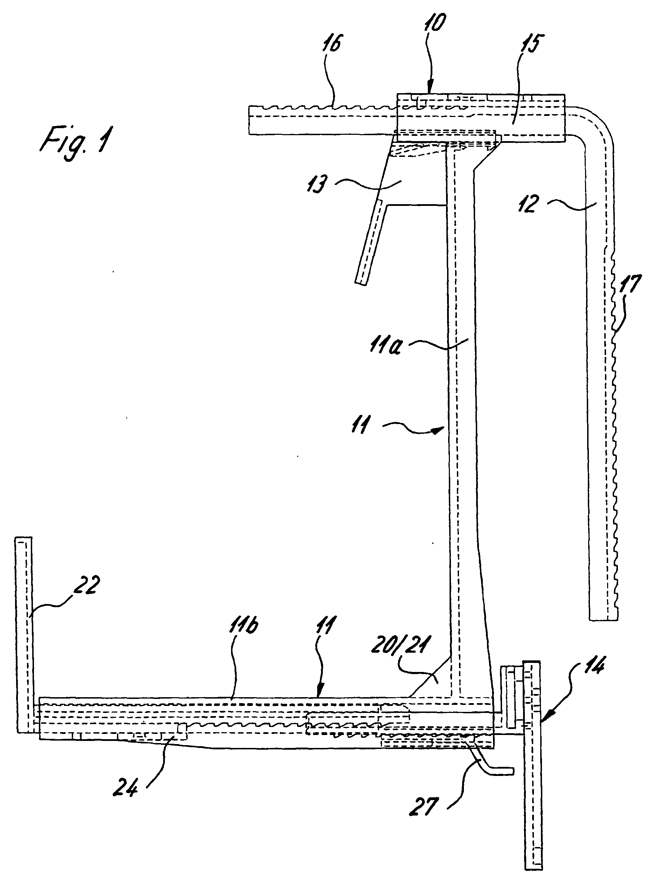

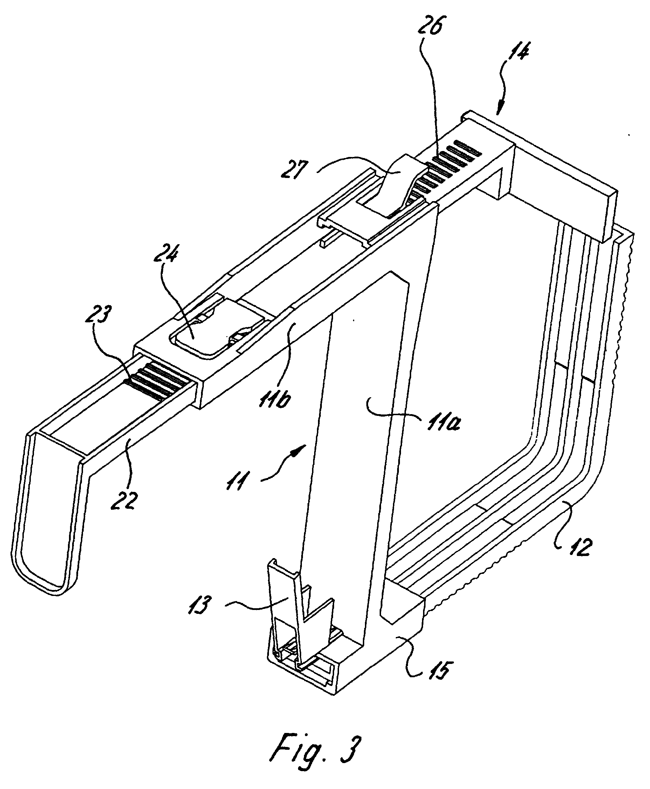

Der in den Figuren 1 bis 4 dargestellte Blumenkastenhalter 10 besteht im wesentlichen aus einem winkelförmigen Tragbügel 11, einem daran verstellbar angeordneten Einhängewinkel 12, einem Sicherungshaken 13 und einem zweiteiligen Ausrichtwinkel 14.

Die vorstehend genannten Bauteile bilden die Grundelemente für den Blumenkastenhalter 10. Dieser ist aus einem beständigen Material, vorzugsweise aus einem Kunststoff gefertigt, der auch noch durch Fasern verstärkt sein kann. Dadurch wird eine form- und materialfedernde Auslegung möglich. Wie noch näher erläutert, sind die Bauteile form- und/oder kraftschlüssig miteinander verbunden, im dargestellten Ausführungsbeispiel durch Verrastungen, die gelöst werden können.

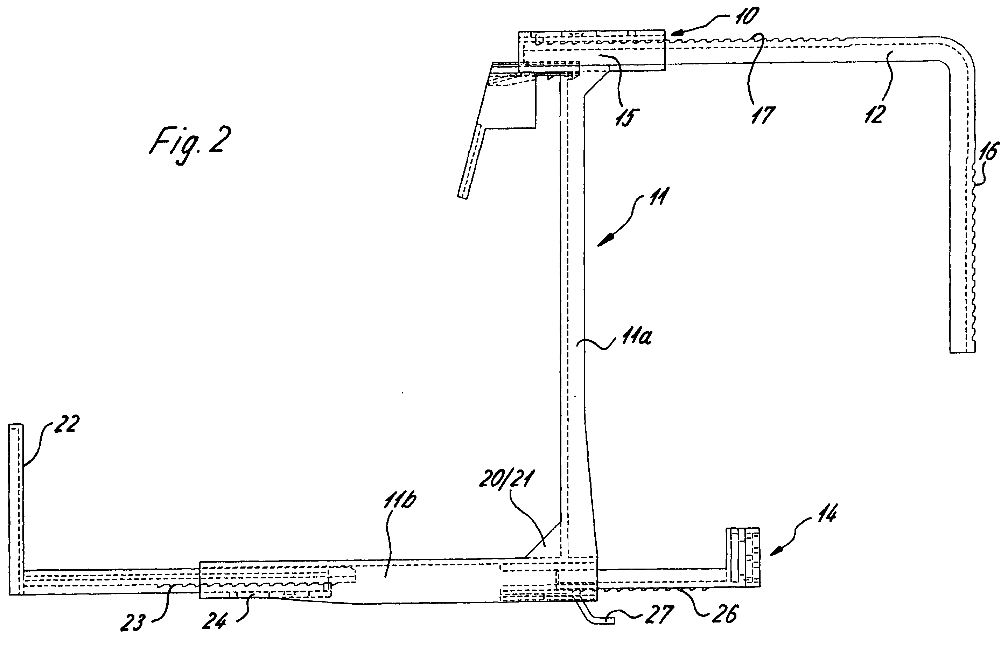

Der Tragbügel 11 ist winkelförmig ausgebildet und besteht, bezogen auf den eingehängten Zustand zur Aufnahme eines nicht dargestellten Blumenkastens aus einem vertikalen Schenkel 11a und einem horizontalen Schenkel 11b. Auf den horizontalen Schenkel 11b stützt sich der nicht dargestellte Blumenkasten ab. Der vertikale Schenkel 11a trägt an seinem freien Ende eine aus einem Hohlprofil gebildete Tasche 15, in die ein Schenkel des winkelförmigen Einhängewinkels 12 eingerastet ist. Die beiden Schenkel des Einhängewinkels 12 sind mit sägezahnförmigen Verzahnungen 16, 17 ausgestattet, die im eingesteckten Zustand oben liegen, d.h. dem horizontalen Schenkel 11b abgewandt. Wie insbesondere die Figur 1 zeigt, sind die beiden Schenkel des Einhängewinkels 12 ungleichlang, so dass der Verstellbereich dadurch noch erhöht werden kann, wie ein Vergleich der Figur 1 mit der Figur 2 zeigt.

Die Tasche ist im Querschnitt viereckig gestaltet und weist an ihrer oberen Seite eine Federlasche 18 als Feststeller auf. An der inneren Seite ist die Federlasche 18 mit wenigstens einem Zahn versehen, der mit der Verzahnung 16 oder 17 ständig in Eingriff steht. Die Verzahnungen 16, 17 sind so gewählt, dass beim Herausziehen des Einhängewinkels 12 aus der Tasche 15 die Federlasche 18 gedrückt werden muß um die Verzahnung 16 bzw. 17 zu entriegeln. Beim Herausziehen liegen demzufolge die steileren Flanken vorn. Das Einschieben des jeweiligen Schenkels des Einhängewinkels 12 in die Tasche 15 erfolgt ohne eine Betätigung der Federlasche 18. Dadurch ist es in einfachster Weise möglich, zunächst zum Aufhängen des Pflanzgefäßes einschließlich der beiden Blumemkastenhalter 10 den Einhängewinkel 12 soweit wie möglich aus der Tasche 15 herauszuziehen und ihn anschließend gegen eine Fläche des Balkongeländers zu drücken, so dass die Blumenkastenhalter 10 abstandsfrei aufgehängt werden können.

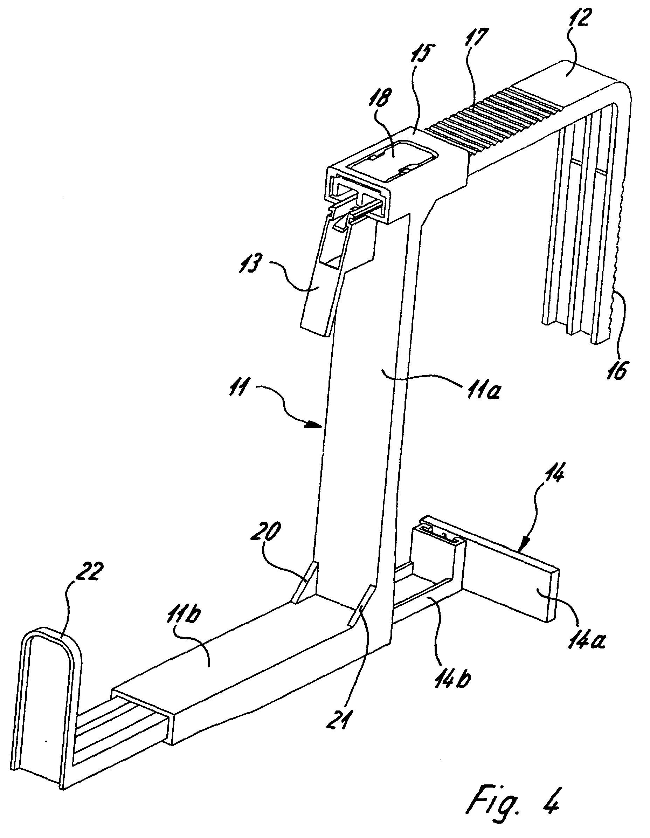

Wie die Figur 4 zeigt, ist die Federlasche 18 durch einen U-förmigen Einschnitt bzw. eine U-förmige Durchbrechung der oberen Wandung der Tasche 15 gebildet. In die Tasche 15 ist außerdem noch der Sicherungshaken 13 eingesteckt, dessen beide Schenkel unter einem stumpfen Winkel zueinander stehen. Dazu ist der Sicherungshaken 13 in dem der Tasche 15 zugeordneten Bereich U-förmig gestaltet, so dass er in einen Schlitz begrenzende Ränder der Tasche eingeschoben werden kann. Der Sicherungshaken 13 weist außerdem einen Federsteg 19 auf, der mit einer Verzahnung versehen ist, die mit einem Steg oder einem Zahn des Einhängewinkels 12 in Eingriff steht. Diese Rastverbindung kann durch Betätigen des Federsteges 19 entriegelt werden, so dass der Sicherungshaken 13 aus der Tasche 15 herausgezogen werden kann. In der entgegengesetzten Richtung kann der Sicherungshaken 13 ohne Betätigen des Federsteges 19 in die Tasche 15 hineingeschoben werden, da die Zähne des Federsteges 19 den Zahn des Einhängewinkels 12 überspringen.

Im dargestellten Ausführungsbeispiel ist der Tragbügel 11 winkelförmig gestaltet und im Verbindungsbereich der beiden Schenkel 11a, 11b durch zwei Dreiecke 20, 21 verstärkt. Der untere, horizontale Schenkel 11b ist ein Hohlprofil, in welches ein Schiebewinkel 22 eingeschoben und arretiert ist. Dazu ist der Schiebewinkel an der unteren, dem Sicherungshaken 13 abgewandten Seite mit einer Verzahnung 23 versehen, die sägezahnförmig gestaltet ist. In der unteren Wandung des horizontalen Schenkels 11b ist eine Lösetaste 24 als Lösemechanismus angeordnet, die mit einem Zahn oder einem Steg ausgerüstet ist, der ständig mit der Verzahnung 23 in Eingriff steht. Durch die sägezahnförmige Gestaltung der Verzahnung 23 kann der Schiebewinkel 22 in Richtung zum vertikalen Schenkel 11a in den horizontalen Schenkel 11b hineingeschoben werden, ohne dass die Lösetaste 24 betätigt wird. Soll jedoch der Schiebewinkel 22 aus dem horizontalen Schenkel 11b herausgezogen werden, muß die Lösetaste 24 betätigt werden, damit der Zahn oder der Steg außer Eingriff mit der Verzahnung 23 kommt. Der freie Schenkel des Schiebewinkels 22 ist zur Sicherung des nicht dargestellten Blumenkastens auf den Sicherungshaken 13 zugerichtet.

In den horizontalen Schenkel 11b des Tragbügels 11 ist außerdem noch der Ausrichtwinkel 14 eingesteckt, der unterhalb des Einhängewinkels 12 liegt. Der Ausrichtwinkel 14 ist an der unteren Seite ebenfalls mit einer Verzahnung 26 versehen, die mit einem Zahn oder einem Steg eines Lösehebels 27 in Eingriff steht. Da die Verzahnung 26 ebenfalls sägezahnförmig gestaltet und so angeordnet ist, dass der Ausrichtwinkel 14 ohne Betätigung des Lösehebels 27 aus dem horizontalen Schenkel 11b herausgezogen werden kann, läßt sich der Blumenkastenhalter 10 äußerst genau ausrichten. Der Ausrichtwinkel 14 ist zweiteilig gestaltet und besteht aus einer Ausrichtplatte 14a und einem Ausrichtwinkel 14b, wie insbesondere die Figur 4 zeigt. In der Figur 4 ist die Ausrichtplatte 14a in einer horizontalen Anordnung dargestellt, d.h. sie steht quer zum vertikalen Schenkel 11a des Tragbügels 11. In der Figur 1 ist sie mit einer um 90° gedrehten Stellung gezeichnet, d.h. sie steht senkrecht und verläuft in Richtung des vertikalen Schenkels 11a. Dadurch ist eine Anpassung an verschiedene Ausführungen von Balkongeländern möglich. Die Ausrichtplatte 14a stützt sich im Regelfall an einem Gitterstab eines Balkongeländers ab. Die Ausrichtplatte 14a ist außerdem mit einem Endbereich am Ausrichtwinkel 14b festgelegt. Der in den horizontalen Schenkel 11b eingeschobene Schenkel 14 des Ausrichtwinkels 25 ist an seinem freien Ende mit einer Aufnahme ausgestattet, in die ein Ansatz des freien Schenkels 14 eingreift. Dieser Ansatz ist so gewählt, dass er nach rechts und links oder nach unten in die Aufnahme eingeschoben werden kann.

In nicht näher dargestellter Weise ist an den oberen Steg oder an den oberen Stegen der dem horizontalen Schenkel 11b des Tragbügels 11 abgewandt liegt, wenigstens ein Zahn oder ein Steg an der Innenseite angeformt, der in die jeweilige Verzahnung 16, 17 des Einhängewinkels 12 eingreift. Dadurch wird verhindert, dass beim versehentlichen Betätigen der Federlasche 18, beispielsweise durch Kinder eine Brennung zwischen dem Tragbügel 11 und dem Einhängewinkel 12 erfolgt. Zum Einschieben des Einhängewinkels 12 in die Tasche 15 muß dieser dann in eine Winkelstellung dazu gebracht werden.

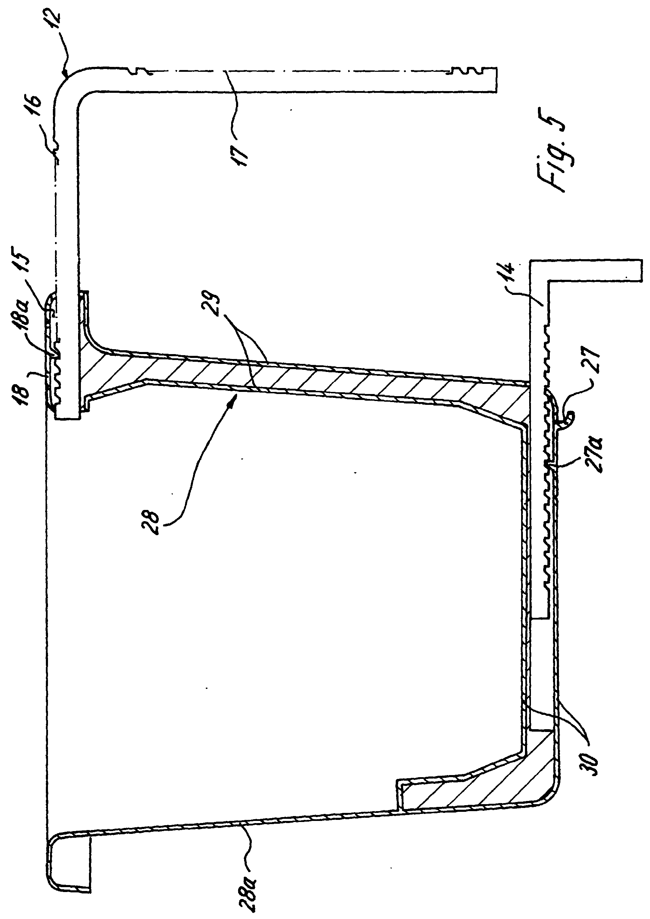

In der Figur 5 ist ein erfindungsgemäßes Pflanzgefäß 28 dargestellt, welches so ausgelegt ist, dass anstelle des kompletten Blumenkastenhalters 10 dieses auch durch mindestens 2 Einhängewinkel 12 aufgehängt werden kann. Der Aufhängewinkel 12 ist baugleich zu dem gemäß dem Blumenkastenhalter nach den Figuren 1 bis 4. Dieses Pflanzgefäß 28 besteht demzufolge zumindest aus einem Blumenkasten 28a und mindestens zwei Einhängewinkeln 12. Im dargestellten Ausführungsbeispiel ist er jedoch auch mit zwei Ausrichtwinkeln 14 ausgestattet. Gemäß der Darstellung nach der Figur 5 ist dieser Ausrichtwinkel 14 jedoch nicht mit der drehbaren Ausrichstplatte 14a ausgestattet. Der Ausrichtwinkel 14 könnte ebenfalls Baugleich zu der Ausführung gemäß den Figuren 1 bis 4 sein und demzufolge auch mit der Ausrichtplatte 14a ausgestattet sein. Der Blumenkasten 28a des erfindungsgemäßen Pflanzgefäßes 28 ist gemäß der Ausführung nach der Figur 5 am oberen Rand einer Seitenwand mit mindestens zwei Taschen 15 ausgestattet, die einen Schenkel des Einhängewinkels 12 aufnehmen. Dazu sind die Taschen 15 ebenfalls mit jeweils einer Federlasche 18 ausgestattet, die an der dem Schenkel des Einhängewinkels 12 zugewandten Seite mit wenigstens einem Zahn 18a ausgestattet ist, der mit der Verzahnung 16 oder 17 des Einhängwinkels 12 in Eingriff steht. Der Blumenkasten 28a kann demzufolge auch ohne mechanische Verbindungselemente aufgehängt werden. Der Ausrichtwinkel 14 wird in eine Tasche des Bodens des Blumenkastens 28a eingesteckt. Der Boden ist zumindest im Verschiebebereich des Ausrichtwinkels 14 mit einer entsprechenden Tasche versehen. Die die Tasche begrenzende untere Wandung ist wiederum mit einem Lösehebel 27 versehen, der mit einem Zahn 27a ausgestattet ist, der mit der Verzahnung des Ausrichtwinkels in Eingriff steht. Durch ziehen an der Lösetaste 27 kann der Ausrichtwinkel 14 aus dem Boden des Blumenkastens 28a herausgezogen werden. Die Lösetaste 27 ist ebenfalls federnd, so dass durch die Art der Verzahnung ein Einschieben bei nicht betätigter Lösetaste 27 verhindert wird. Der in der Figur 5 dargestellte Blumenkasten 28a wird durch Umschichten eines Einlegeteils gebildet. Um Material zu sparen, erstreckt sich dieses Einlegeteil über die Seitenwandung, die die Taschen 15 aufweist, über den Boden und über eine relativ geringe Höhe der gegenüberliegenden Seitenwand. Die äußeren Schichten der die Taschen 15 aufweisenden Seitenwand sind durch die Bezugszeichen 29 die des Bodens durch das Bezugszeichen 30 gekennzeichnet. Die Gestaltung und die Funktion des Einhängewinkels 12 und des Ausrichtwinkels 14 sind im wesentlichen gleich zu denen des Blumenkastenhalters 10 gemäß den Figuren 1 bis 4.

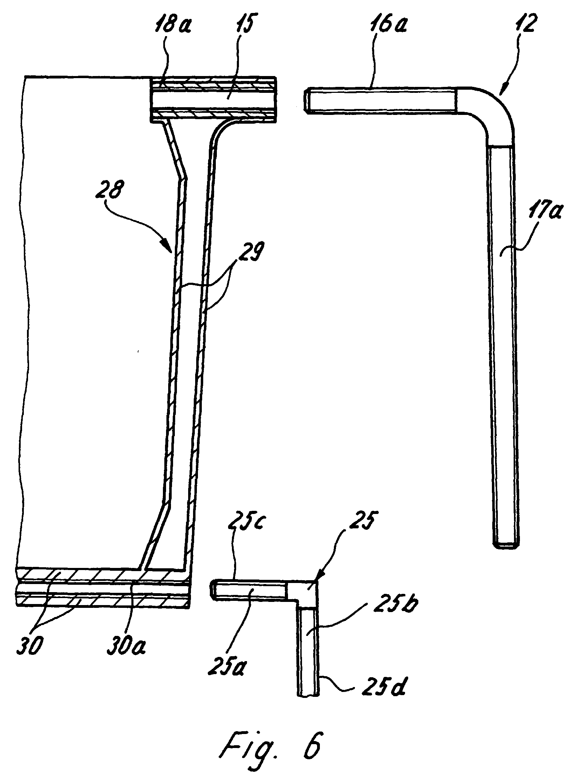

Die Figur 6 zeigt eine Ausführung, bei der beide Schenkel des Einhängewinkels 12 mit einem Außengewinde 16a, 17b versehen sind, die die Profilierung bilden. Demzufolge ist die Tasche 15a innenseitig mit einem Innengewinde 18a ausgestattet, so daß der jeweilige Schenkel darin eingedreht werden kann. Der Feststeller ist in diesem Falle das Innengewinde 18a. In dem Freiraum der beiden Wände 30 des Bodens des Blumenkastens 28 ist ebenfalls ein Innengewinde 30a vorgesehen, in das ein Schenkel des Ausrichtwinkels 25 eingedreht werden kann. Im dargestellten Ausführungsbeispiel sind beide Schenkel 25a, 25b des Ausrichtwinkels 25 mit einem Außengewinde 25c bzw. 25d ausgestattet, so daß wahlweise einer der beiden Schenkel 25a oder 25b in den Boden des Blumenkastens 28 eingedreht werden kann. Auch in diesem Falle ist der Feststeller bzw. die Lösetaste das Innengewinde 30a. Der Einhängewinkel 12 und der Ausrichtwinkel 25 könnten als Massivkörper oder auch als rohrförmiger Körper gestaltet sein.

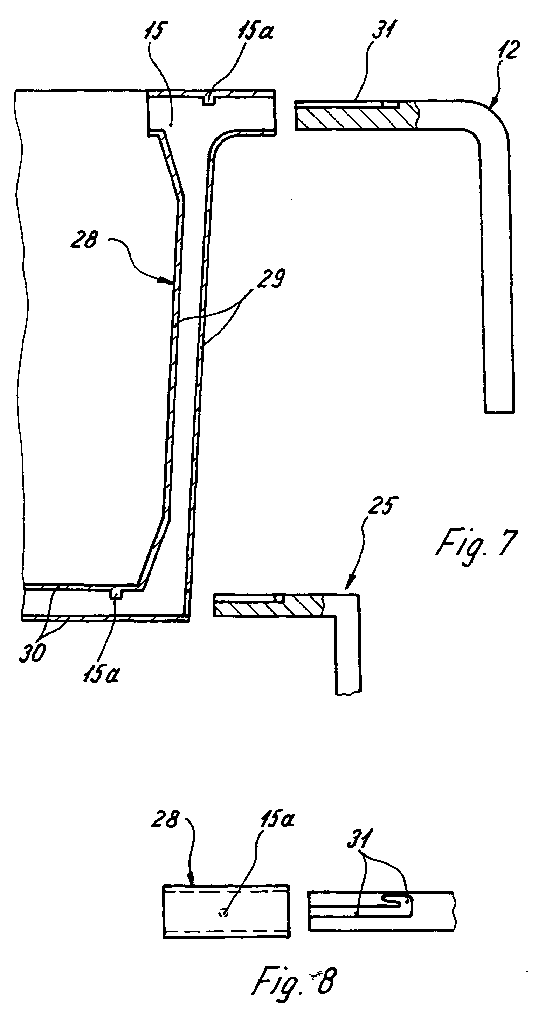

Bei der Ausführung nach den Figuren 7 und 8 erfolgt die Verbindung des Einhängewinkels 12 und des Ausrichtwinkels 25 mit dem Blumenkasten 28 durch einen Steckverbinder in Form eines Bajonettverschlusses. In die Tasche 15 des oberen Randes der Wand des Blumenkastens 28 bzw. in den Freiraum des Bodens ragt als Feststeller ein Zapfen 25a ein, der in eine U-förmige Nut oder eine U-förmige Durchbrechung 31 des Einhängewinkels 12 bzw. des Ausrichtwinkels 25 eingreift. Aus den Figuren ergibt sich, daß der Ausrichtwinkel 25 bzw. der Einhängewinkel 12 so zum Blumenkasten 28 gehalten werden muß, daß zunächst der jeweilige Schenkel in die Tasche 15 bzw. in den Freiraum des Bodens eingeschoben werden kann. Sobald der Grund der Nut 31 einen Anschlag bildet, muß der Einhängewinkel 12 bzw. der Ausrichtwinkel 25 um einen relativ kleinen Winkel gedreht werden, bis die den senkrechten Teil begrenzende Fläche wiederum einen Anschlag bildet. Der Einhängewinkel 12 bzw. Ausrichtwinkel 25 kann dann in der ursprünglichen Richtung um einen relativ geringen Betrag zurückgezogen werden. Dadurch ist eine einwandfreie Fixierung des Einhängewinkels 12 bzw. Ausrichtwinkels 25 gegeben.

Die Ausführungen nach den Figuren 6 und 7 zeigen die Verbindungen zwischen dem Einhängewinkel 12, dem Ausrichtwinkel 25 und dem Blumenkasten 28. In gleicher Weise sind auch die Verbindungen mit einem Blumenkastenhalter 10 zu gestalten. Grundsätzlich können alle möglichen form- und/oder kraftschlüssigen Verbindungen zwischen dem Einhängewinkel 12, dem Ausrichtwinkel 25 mit einem Blumenkasten bzw. einer Wand eines Blumenkastens 28 oder einem Blumenkastenhalter 11 zur Anwendung kommen. Die Erfindung ist demzufolge auch nicht auf die dargestellten Ausführungsbeispiele beschränkt, da es wesentlich ist, daß der Blumenkasten und die zum Aufhängen notwendigen Bauteile aus einem beständigen Material bestehen, und daß zur Verbindung keine mechanischen Verbindungselemente und keine Werkzeuge notwendig sind.

## Patentansprüche

1. Aufhängbares Pflanzgefäß, welches aus einem Blumenkasten (28) und Blumenkastenhaltern (10) besteht, und der Blumenkastenhalter (10) mit einem Einhängewinkel (12) einem Tragbügel (11) und vorzugsweise wenigstens einem Sicherungshaken ausgestattet ist, und bei dem zumindest der Blumenkasten (28) aus einem beständigen Material gefertigt ist, **dadurch gekennzeichnet, dass** auch die Blumenkastenhalter (10) aus einem beständigen Material gefertigt sind, und dass zumindest jeder Einhängewinkel (12) in eine Tasche (15) oder eine Aussparung des Tragbügels (11) oder des Blumenkastens (28) einsetzbar und mittels eines Feststellers (18) form- und/oder kraftschlüssig sowie gegebenenfalls einstellbar mit dem Tragbügel (11) oder dem Blumenkasten 28 verbunden ist.

2. Aufhängbares Pflanzgefäß nach Anspruch 1, **dadurch gekennzeichnet, dass** wenigstens ein Schenkel des Einhängewinkels (12) eine Verzahnung (16, 17) oder eine Profilierung aufweist, die mit dem der Tasche (15) oder der Aussparung zugeordneten Feststeller (18) in und außer Eingriff bringbar ist.

3. Aufhängbares Pflanzgefäß nach Anspruch 2, **dadurch gekennzeichnet, dass** der Feststeller eine in einer die Tasche (15) oder die Aussparung begrenzenden Wandung angeordnete Federlasche oder eine Klinke (18) ist, die innenseitig mit einer Gegenverzahnung ausgestattet ist, und dass die Verzahnungen (16, 17) so ausgelegt sind, dass der Einhängewinkel (12) zur Verkleinerung des Abstandes zwischen dem freien Schenkel des Einhängewinkels (12) und dem parallel dazu stehenden Schenkel (11a) des Tragbügels (11) oder der zugewandten Seitenwand des Blumenkastens (28) in die Tasche (15) der Aussparung einschiebbar und in der entgegengesetzten oder in beiden Schieberichtungen blockiert ist.

4. Aufhängbares Pflanzgefäß nach einem oder mehreren der vorhergehenden Ansprüche 1 bis 3, **dadurch gekennzeichnet, dass** jeder Einhängewinkel (12) ungleichschenklig gestaltet ist, und dass beide Schenkel eine Verzahnung (16, 17) oder eine Profilierung aufweisen.

5. Aufhängbares Pflanzgefäß nach einem oder mehreren der vorhergehenden Ansprüche 1 bis 4, **dadurch gekennzeichnet, dass** die Federlasche (18) durch eine U-förmig Durchbrechung gebildet ist, und dass die Verzahnungen (16, 17) jedes Einhängewinkels (12) sägezahnförmig gestaltet sind.

6. Aufhängbares Pflanzgefäß nach Anspruch 1, **dadurch gekennzeichnet, dass** jeder Sicherungshaken (13) mit einem Schenkel rastend in eine Führung der Tasche (15) eingesetzt ist.

7. Aufhängbares Pflanzgefäß nach Anspruch 6, **dadurch gekennzeichnet, dass** jeder Sicherungshaken (13) einen Federsteg (19) aufweist, der eine Verzahnung oder eine Profilierung aufweist, die mit einer Gegenverzahnung eines Steges des Einhängewinkels (12) in Eingriff steht.

8. Aufhängbares Pflanzgefäß nach Anspruch 1, welches durch mindestens zwei Blumenkastenhalter aufhängbar ist, **dadurch gekennzeichnet, dass** der Tragbügel (11) winkelförmig ausgebildet ist, und dass der waagerechte, der Tasche (15) für den Einhängewinkel (12) abgewandte horizontale Schenkel (11b) zur Veränderung der Breite des Tragbügels (11) einen Schiebewinkel (22) trägt, der rastend mit dem waagerechten Schenkel (11b) verbunden ist.

9. Aufhängbares Pflanzgefäß nach Anspruch 8, **dadurch gekennzeichnet, dass** der waagerechte Schenkel (11b) des Tragbügels (11) ein Hohlprofil ist, und dass der eingreifende Schenkel des Schiebewinkels (12) eine Verzahnung oder ein Profilierung aufweist, und dass der waagerechte Schenkel (11b) zur Entriegelung der Verzahnung oder der Profilierung mit einer Lösetaste (24) ausgerüstet ist.

10. Aufhängbares Pflanzgefäß nach Anspruch 9, **dadurch gekennzeichnet, dass** die Verzahnung des Schiebewinkels (22) sägezahnförmig derart gestaltet ist, dass dieser gegen Herausziehen aus dem waagerechten Schenkel (11b) durch die Lösetaste (24) gesichert ist.

11. Aufhängbares Pflanzgefäß nach einem oder mehreren der vorhergehenden Ansprüche 1 bis 10, **dadurch gekennzeichnet, dass** der horizontale Schenkel (11b) des Tragbügels (11) oder der Boden des Blumenkastens (28) ein Ausrichtelement trägt, welches mit dem waagerechten Schenkel (11b) in verschiedenen Stellungen verrastbar ist und welches unterhalb des Einhängewinkels (12) liegt.

12. Aufhängbares Pflanzgefäß nach Anspruch 11, **dadurch gekennzeichnet, dass** das Ausrichtelement ein Ausrichtwinkel (25) ist, das ein Schenkel des Ausrichtwinkels (25) in den horizontalen Schenkel (11b) des Tragbügels (11) oder in den Boden des Blumenkastens (28) eingreift, und dass der äußere freie Schenkel (25a) gegenüber dem anderen Schenkel in wenigstens zwei verschiedene Stellungen bringbar ist.

13. Aufhängbares Pflanzgefäß nach einem oder mehreren der vorhergehenden Ansprüche 11 bis 12, **dadurch gekennzeichnet, dass** der in den horizontalen Schenkel des Tragbügels (11) oder in den Boden des Blumenkastens (28) eingreifende Schenkel des Ausrichtwinkels (25) eine sägezahnförmige Verzahnung (26) aufweist und dass der horizontale Schenkel (11b) oder eine äußere Schicht des Bodens des Blumenkastens (28) einen Lösehebel (27) oder eine Lösetaste trägt.

14. Aufhängbares Pflanzgefäß nach einem oder mehreren der vorhergehenden Ansprüche 11 bis 13, **dadurch gekennzeichnet, dass** der Ausrichtwinkel (25) gegen das Einschieben in den horizontalen Schenkel (11b) des Tragbügels (11) oder in den Boden des Blumenkastens (28) blockiert ist.

15. Aufhängbares Pflanzgefäß nach einem oder mehreren der vorhergehenden Ansprüche 1 bis 14, **dadurch gekennzeichnet, dass** in der Tasche (15) oder in der Aussparung des Tragbügels (12) oder in dem Blumenkasten (28) innenseitig an dem oberen, dem horizontalen Schenkel (11b) oder dem Boden des Blumenkastens (28) abgewandten Seite wenigstens ein in die Verzahnung oder in die Profilierung (16, 17) des Einhängewinkels (12) eingreifender Zahn oder Steg vorgesehen ist.

16. Aufhängbares Pflanzgefäß nach einem oder mehreren der vorhergehenden Ansprüche 1 bis 15, dadurch gekennzeichnet, daß die Profilierung 816, 17) jedes Einhängewinkels (12) als Außengewinde (16a, 17a) gestaltet ist, und daß der Feststeller ein entsprechendes Innengewinde (18a) der Tasche (15) des Tragbügels (11) oder der Seitenwand des Blumenkastens (28) ist.

17. Aufhängbares Pflanzgefäß nach einem oder mehreren der vorhergehenden Ansprüche 1 bis 16, dadurch gekennzeichnet, daß zumindest ein Schenkel (25a, 25b) des Ausrichtwinkels (25) ein Außengewinde (25c, 25d) als Profilierung aufweist, und daß im horizontalen Schenkel (11b) des Tragbügels (11) oder im Boden des Blumenkastens (28) ein entsprechendes Innengewinde als Blockierelement oder Löseelement vorgesehen ist.

18. Aufhängbares Pflanzgefäß nach einem oder mehreren der vorhergehenden Ansprüche 1 bis 15, dadurch gekennzeichnet, daß jede formschlüssige Verbindung zwischen jeder Tasche (15) des Tragbügels (11) oder der Seitenwand des Blumenkastens (28) und ggf. die formschlüssige Verbindung zwischen dem horizontalen Schenkel des Tragbügels (11) oder dem Boden des Blumenkastens (28) und dem Ausrichtwinkel (25) nach Art eines Steckverbinders gestaltet ist.

19. Aufhängbares Pflanzgefäß nach Anspruch 18, dadurch gekennzeichnet, daß jeder Steckverbinder nach Art eines Bajonettverschlusses ausgebildet ist, und daß der Feststeller (18) ein fester Zapfen (15a) der in die Tasche (15) des Tragbügels (11) oder der Seitenwand des Blumenkastens (28) bzw. in den Freiraum des horizontalen Schenkels (11) des Tragbügels (11) oder in den Freiraum des Bodens des Blumenkastens (18) hineinragt, und daß die U-förmige Ausnehmung in dem Einhängewinkel (12) oder dem Ausrichtwinkel (25) vorgesehen ist.
